# EUROPEAN PATENT SPECIFICATION

(11) **EP 4 150 994 B1**
(45) Date of publication and mention of the grant of the patent: **29.04.2026**
(21) Application number: 20934976.0
(22) Date of filing: 15.05.2020
(51) Int. Cl.: H04W 28/16, H04W 88/08

(54) **METHOD AND NETWORK DEVICE FOR RESOURCE COORDINATION**
VERFAHREN UND NETZWERKVORRICHTUNG ZUR RESSOURCENKOORDINATION
PROCÉDÉ ET DISPOSITIF DE RÉSEAU POUR UNE COORDINATION DE RESSOURCES

(43) Date of publication of application: 22.03.2023
(73) Proprietor: Telefonaktiebolaget LM Ericsson (publ), 164 83 Stockholm (SE)
(72) Inventor: LIU, Jiyan, Beijing 100120 (CN); GAO, Xiang, Beijing 100120 (CN); JIA, Ying, Beijing 100120 (CN); HAN, Yue, Beijing 100120 (CN); WANG, Yi, Beijing 100120 (CN)
(74) Representative: Ericsson
(86) International application number: PCT/CN2020/090617
(87) International publication number: WO 2021/227047

(56) References cited:
- EP-A1- 3 582 582
- WO-A1-2019/246470
- HUAWEI ET AL: "Resource coordination function in W1 interface", vol. RAN WG3, no. Xi'an, China; 20190408 - 20190412, 6 April 2019 (2019-04-06), XP051703237, Retrieved from the Internet <URL:http://www.3gpp.org/ftp/Meetings%5F3GPP%5FSYNC/RAN3/Docs/R3%2D191966%2Ezip> [retrieved on 20190406]
- HUAWEI ET AL: "F1 support for LTE - NR coexistence", vol. RAN WG3, no. Busan, Korea; 20180521 - 20180525, 28 May 2018 (2018-05-28), XP051527571, Retrieved from the Internet <URL:http://www.3gpp.org/ftp/tsg%5Fran/WG3%5FIu/TSGR3%5F100/Docs/R3%2D183427%2Ezip> [retrieved on 20180528]
- HUAWEI ET AL.: "Resource coordination function in W1 interface", 3GPP TSG-RAN WG3 MEETING #103BIS R3-191966, 12 April 2019 (2019-04-12), XP051695416
- HUAWEI ET AL.: "(TP for EN-DC BL CR for TS 38.473) F1 support for LTE - NR coexistence", 3GPP TSG-RAN WG3#100 R3-183085, 25 May 2018 (2018-05-25), XP051527255
- NOKIA ET AL.: "(TP for NR BL CR for TS 38.473) F1 Load management", 3GPP TSG-RAN WG3#NR ADHOC 1807 R3-183859, 6 July 2018 (2018-07-06), XP051529741

## Description

### TECHNICAL FIELD

The present disclosure relates to communication technology, and more particularly, to a method and a network device for resource coordination.

### BACKGROUND

An Evolved Universal Terrestrial Radio Access (E-UTRA) - New Radio (NR) cell resource coordination procedure is defined in the 3^{rd} Generation Partnership Project (3GPP) Technical Specification (TS) 36.423, V15.9.0. The purpose of this procedure is to enable coordination of radio resource allocation between an evolved NodeB (eNB) and an en-gNB (E-UTRA - NR next generation NodeB, a node providing NR user plane and control plane protocol terminations towards a User Equipment (UE), and acting as a Secondary Node in E-UTRA - NR Dual Connectivity (EN-DC)) that are sharing spectrum and have fully or partially overlapping coverage areas. During the procedure, the eNB and the en-gNB exchange their intended resource allocations for data traffic, and, if possible, converge to a shared resource.

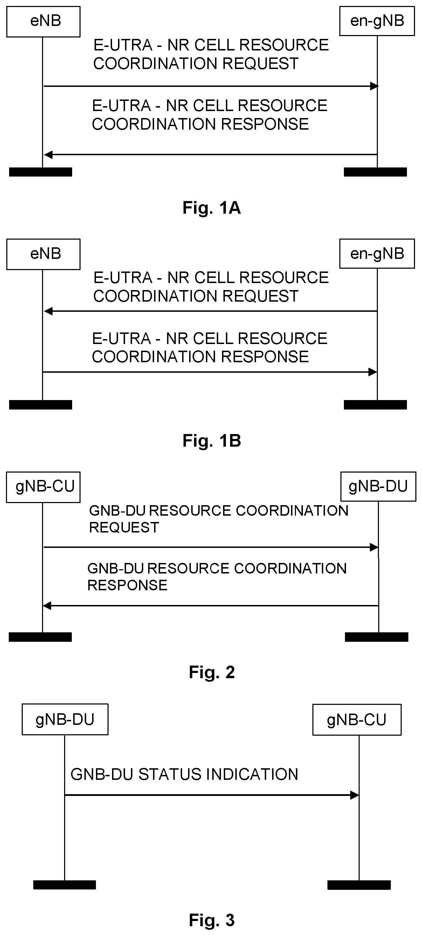

The E-UTRA - NR Cell Resource Coordination procedure can be initiated by either an eNB (as shown in Fig. 1A) or an en-gNB (as shown in Fig. 1B).

In Fig. 1A, an eNB initiates the procedure by sending an E-UTRA - NR cell resource coordination request message to an en-gNB over an X2 interface. The en-gNB extracts a Data Traffic Resource Indication Information Element (IE) and it replies by sending an E-UTRA - NR cell resource coordination response message. In Fig. 1B, an en-gNB initiates the procedure by sending an E-UTRA - NR cell resource coordination request message to an eNB. The eNB replies with an E-UTRA - NR cell resource coordination response message. For further details of the E-UTRA - NR Cell Resource Coordination procedure, reference can be made to Section 8.7.15 of 3GPP TS 36.423.

A next generation NodeB (gNB) - Distributed Unit (DU) Resource Coordination procedure is defined in 3GPP TS 38.473, V15.9.0. The purpose of this procedure is to enable coordination of radio resource allocation between a gNB - Central Unit (CU) and a gNB-DU for the purpose of e.g., spectrum sharing between E-UTRA and NR.

Fig. 2 shows an NR-initiated gNB-DU Resource Coordination procedure. In is case, an E-UTRA - NR Cell Resource Coordination Response Container in a gNB-DU resource coordination response message shall be included. As shown, a gNB-CU initiates the procedure by sending a gNB-DU resource coordination request message to a gNB-DU over an F1 interface. The gNB-DU extracts an E-UTRA - NR Cell Resource Coordination Request Container IE and it replies by sending a gNB-DU resource coordination response message. In case of the NR-initiated gNB-DU Resource Coordination procedure, an Ignore Coordination Request Container IE shall be present and set to "yes" and the E-UTRA - NR Cell Resource Coordination Request Container IE in the gNB-DU resource coordination request message shall be ignored. For further details of the gNB-DU Resource Coordination procedure, reference can be made to Section 8.2.6 of 3GPP TS 38.473.

A gNB-DU Status Indication procedure is defined in 3GPP TS 38.473. The purpose of this procedure is to inform a gNB-CU that a gNB-DU is overloaded so that overload reduction actions can be applied.

Fig. 3 shows a gNB-DU Status Indication procedure. As shown, a gNB-DU sends a gNB-DU status indication message to a gNB-CU. If a gNB-DU Overload Information IE in the gNB-DU status indication message indicates that the gNB-DU is overloaded, the gNB-CU shall apply overload reduction actions until informed, with a new gNB-DU status indication message, that the overload situation has ceased. For further details of the gNB-DU Status Indication procedure, reference can be made to Section 8.2.7 of 3GPP TS 38.473.

3GPP TSG-RAN WG3 R3-191966 by Huawei, China Unicom discusses resource coordination functions for the W1 interface in NG-RAN systems.

### SUMMARY

In the gNB (e.g., an en-gNB) initiated E-UTRA - NR cell resource coordination as described above in connection with Fig. 1B, the coordination pattern (i.e., how radio resource allocated are coordinated between the gNB and the eNB) is decided by the gNB-DU, whereas the resource coordination with the eNB is initiated by the gNB-CU. The procedure shown in Fig. 2 or Fig. 3 does not allow the gNB-DU to initiate such resource coordination, as neither of the gNB-DU resource coordination response message in Fig. 2 and the gNB-DU status indication message in Fig. 3 can provide the gNB-CU with a proper request for resource coordination. For example, neither of the gNB-DU resource coordination response message in Fig. 2 and the gNB-DU status indication message in Fig. 3 contains information required for resource coordination (e.g., group identification or cell identification identifying which cell group or cell is involved in the resource coordination).

It is an object of the present disclosure to provide a method and a network device for resource coordination, enabling a DU in the network device to initiate resource coordination properly.

According to a first aspect of the present disclosure, a method in a DU of a network device that is a next generation NodeB, gNB, is provided. The method includes: transmitting, to a CU of the network device, a first message containing a request for resource coordination with another network device that is an evolved NodeB, eNB; and receiving, from the CU, a second message containing a response to the request from the other network device. The resource coordination is initiated by a gNB-DU of the network device.

In an embodiment, the first message may be gNB-DU resource coordination request, and the second message may be a gNB-DU resource coordination response.

In an embodiment, the first message may be a gNB-DU resource coordination response, and the second message may be a gNB-DU resource coordination request.

In an embodiment, the first message may be transmitted in response to another gNB-DU resource coordination request from the CU.

In an embodiment, the request may be an E-UTRA - NR cell resource coordination request, and the response may be an E-UTRA - NR cell resource coordination response.

In an embodiment, the first message may contain a group identification and a cell identification indicating at least one cell involved in the resource coordination.

According to a second aspect of the present disclosure, a method in a CU of a network device that is a next generation NodeB, gNB, is provided. The method includes: receiving, from a DU of the network device, a first message containing a request for resource coordination with another network device that is an evolved NodeB, eNB; and transmitting, to the DU, a second message containing a response to the request from the other network device The method further includes: transmitting, to the other network device, a third message containing the request for resource coordination with the other network device, in response to receiving the first message; and receiving, from the other network device, a fourth message containing the response to the request. The second message may be transmitted in response to receiving the fourth message.

In an embodiment, the first message may be a gNB-DU resource coordination request, and the second message may be a gNB-DU resource coordination response.

In an embodiment, the first message may be a gNB-DU resource coordination response, and the second message may be a gNB-DU resource coordination request.

In an embodiment, the method may further include: transmitting, to the DU, another gNB-DU resource coordination request. The first message may be received as a response to the other gNB-DU resource coordination request.

In an embodiment, the request may be an E-UTRA - NR cell resource coordination request, and the response may be an E-UTRA - NR cell resource coordination response.

In an embodiment, the first message may contain a group identification and a cell identification indicating at least one cell involved in the resource coordination.

According to a third aspect of the present disclosure, a DU is provided. The DU includes a communication interface, a processor and a memory. The memory contains instructions executable by the processor whereby the DU is operative to perform the method according to the above first aspect.

According to a fourth aspect of the present disclosure, a computer readable storage medium is provided. The computer readable storage medium has computer program instructions stored thereon. The computer program instructions, when executed by a processor in a DU, cause the DU to perform the method according to the above first aspect.

According to a fifth aspect of the present disclosure, a CU is provided. The CU includes a communication interface, a processor and a memory. The memory contains instructions executable by the processor whereby the CU is operative to perform the method according to the above second aspect.

According to a sixth aspect of the present disclosure, a computer readable storage medium is provided. The computer readable storage medium has computer program instructions stored thereon. The computer program instructions, when executed by a processor in a CU, cause the CU to perform the method according to the above second aspect.

According to a seventh aspect of the present disclosure, a network device is provided. The network device includes a DU according to the above third aspect and a CU according to the above fifth aspect.

With the embodiments of the present disclosure, a DU of a network device can transmit, to a CU of the network device, a first message containing a request for resource coordination with another network device, and receives, from the CU, a second message containing a response to the request from the other network device. In this way, the DU is enabled to initiate the resource coordination properly.

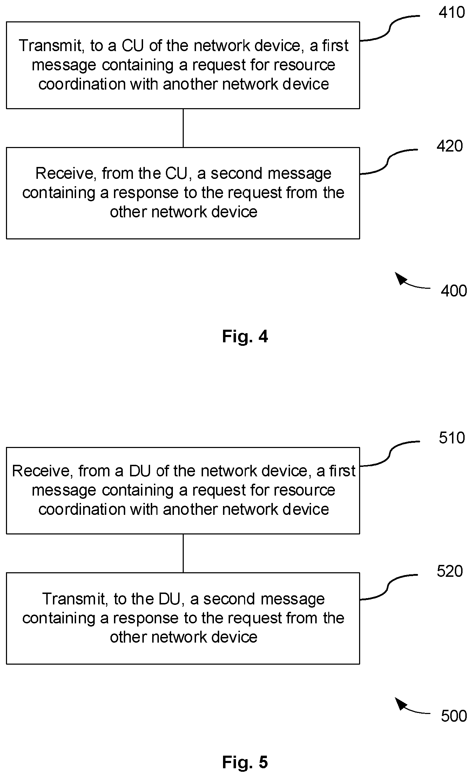

In the following the invention is best understood in view of figures 4 and 5 and the associated passages. The remaining embodiments, aspects and examples disclosed below are included for illustrative purpose and for facilitating the understanding of the invention.

### BRIEF DESCRIPTION OF THE DRAWINGS

The above and other objects, features and advantages will be more apparent from the following description of embodiments with reference to the figures, in which:
- Fig. 1A: is a sequence diagram of an eNB initiated E-UTRA - NR Cell Resource Coordination procedure;
- Fig. 1B: is a sequence diagram of an en-gNB initiated E-UTRA - NR Cell Resource Coordination procedure;
- Fig. 2: is a sequence diagram of an NR-initiated gNB-DU Resource Coordination procedure;
- Fig. 3: is a sequence diagram of a gNB-DU Status Indication procedure;
- Fig. 4: is a flowchart illustrating a method in a DU of a network device according to an embodiment of the present invention;
- Fig. 5: is a flowchart illustrating a method in a CU of a network device according to another embodiment of the present invention;
- Fig. 6: is a sequence diagram of an example of a resource coordination procedure according to the present disclosure;
- Fig. 7: is a sequence diagram of another example of a resource coordination procedure according to the present disclosure;
- Fig. 8: is a block diagram of a DU according to an embodiment of the present disclosure;
- Fig. 9: is a block diagram of a DU according to another embodiment of the present disclosure;
- Fig. 10: is a block diagram of a CU according to an embodiment of the present disclosure;
- Fig. 11: is a block diagram of a CU according to another embodiment of the present disclosure;
- Fig. 12: is a block diagram of a network device according to an embodiment of the present disclosure;
- Fig. 13: schematically illustrates a telecommunication network connected via an intermediate network to a host computer;
- Fig. 14: is a generalized block diagram of a host computer communicating via a base station with a user equipment over a partially wireless connection; and
- Figs. 15 to 18: are flowcharts illustrating methods implemented in a communication system including a host computer, a base station and a user equipment.

### DETAILED DESCRIPTION

As used herein, the term "network device" refers to a device in a wireless communication network via which a terminal device accesses the network and receives services therefrom. The network device refers to a base station (BS), an access point (AP), or any other suitable device in the wireless communication network. The BS may be, for example, a node B (NodeB or NB), an evolved NodeB (eNodeB or eNB), or a (next) generation NodeB (gNB). More generally, the network device may represent any suitable device (or group of devices) capable, configured, arranged, and/or operable to enable and/or provide a terminal device access to the wireless communication network or to provide some service to a terminal device that has accessed the wireless communication network.

References in the specification to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

Fig. 4 is a flowchart illustrating a method 400 according to an embodiment of the present disclosure. The method 400 is performed by a DU of a network device.

At block 410, a first message containing a request for resource coordination with another network device is transmitted to a CU of the network device. Here, the request can be an E-UTRA - NR cell resource coordination request.

At block 420, a second message containing a response to the request from the other network device is received from the CU. Here, the response can be an E-UTRA - NR cell resource coordination response.

The network device can be e.g., an en-gNB, and the other network device can be e.g., an eNB for resource coordination with the en-gNB. Alternatively, the network device can be e.g., a gNB, and the other network device can be e.g., an ng-eNB (next generation - eNB, a node providing E-UTRA user plane and control plane protocol terminations towards a UE, and connected via the next generation (NG) interface to the 5^{th} Generation Core (5GC)) for resource coordination with the gNB. In the context of the present disclosure, the term "gNB" may refer to a gNB connected with an ng-eNB via an Xn interface, or an en-gNB connected to an eNB via an X2 interface. Similarly, the term "eNB" may refer to an ng-eNB connected with a gNB via an Xn interface, or an eNB connected to an en-gNB via an X2 interface. For details of the Xn Application Protocol (XnAP), reference can be made to 3GPP TS 38.423, V15.7.0.

In an example, the first message can be a gNB-DU resource coordination request (or a new message defined for the purpose of resource coordination request), and the second message can be a gNB-DU resource coordination response (or a new message defined for the purpose of resource coordination response). Here, the gNB-DU resource coordination request as defined in 3GPP TS 38.473 can be used as the first message, with the direction of the message being changed into "gNB-DU to gNB-CU". The gNB-DU resource coordination request here may include an E-UTRA - NR Cell Resource Coordination Request Container IE, which contains an X2 Application Protocol (X2AP) E-UTRA - NR CELL RESOURCE COORDINATION REQUEST defined in 3GPP TS 36.423 or an XnAP E-UTRA - NR CELL RESOURCE COORDINATION REQUEST defined in 3GPP TS 38.423. The X2AP E-UTRA - NR CELL RESOURCE COORDINATION REQUEST or the XnAP E-UTRA - NR CELL RESOURCE COORDINATION REQUEST may include a group identification (e.g., Spectrum Sharing Group ID) and a cell identification (e.g., E-UTRA Cell ID) indicating at least one cell involved in the resource coordination. Accordingly, the gNB-DU resource coordination response as defined in 3GPP TS 38.473 can be used as the second message, with the direction of the message being changed into "gNB-CU to gNB-DU". The gNB-DU resource coordination response here may include an E-UTRA - NR Cell Resource Coordination Response Container IE, which contains an X2 Application Protocol (X2AP) E-UTRA - NR CELL RESOURCE COORDINATION RESPONSE defined in 3GPP TS 36.423 or an XnAP E-UTRA - NR CELL RESOURCE COORDINATION RESPONSE defined in 3GPP TS 38.423.

Alternatively, the first message can be a gNB-DU resource coordination response (or a new message defined for the purpose of resource coordination request), and the second message can be a gNB-DU resource coordination request (or a new message defined for the purpose of resource coordination response). In this case, the first message can be transmitted in response to another gNB-DU resource coordination request from the CU. Here, the gNB-DU resource coordination response as defined in 3GPP TS 38.473 can be used as the first message. In an example, the gNB-DU resource coordination response here may include an E-UTRA - NR Cell Resource Coordination Request Container IE, which contains an X2 Application Protocol (X2AP) E-UTRA - NR CELL RESOURCE COORDINATION REQUEST defined in 3GPP TS 36.423 or an XnAP E-UTRA - NR CELL RESOURCE COORDINATION REQUEST defined in 3GPP TS 38.423. The X2AP E-UTRA - NR CELL RESOURCE COORDINATION REQUEST or the XnAP E-UTRA - NR CELL RESOURCE COORDINATION REQUEST may include a group identification (e.g., Spectrum Sharing Group ID) and a cell identification (e.g., E-UTRA Cell ID) indicating at least one cell involved in the resource coordination. In another example, the gNB-DU resource coordination response here may include an E-UTRA - NR Cell Resource Coordination Response Container IE, which contains an X2AP E-UTRA - NR CELL RESOURCE COORDINATION RESPONSE defined in 3GPP TS 36.423 or an XnAP E-UTRA - NR CELL RESOURCE COORDINATION RESPONSE defined in 3GPP TS 38.423, for the purpose of E-UTRA - NR cell resource coordination request. Accordingly, the gNB-DU resource coordination request as defined in 3GPP TS 38.473 can be used as the second message. The gNB-DU resource coordination request here may include an E-UTRA - NR Cell Resource Coordination Response Container IE, which contains an X2AP E-UTRA - NR CELL RESOURCE COORDINATION RESPONSE defined in 3GPP TS 36.423 or an XnAP E-UTRA - NR CELL RESOURCE COORDINATION RESPONSE defined in 3GPP TS 38.423.

Fig. 5 is a flowchart illustrating a method 500 according to an embodiment of the present disclosure. The method 500 is performed by a CU of a network device.

At block 510, a first message containing a request for resource coordination with another network device is received from a DU of the network device. Here, the request can be an E-UTRA - NR cell resource coordination request.

At block 520, a second message containing a response to the request from the other network device is transmitted to the DU. Here, the response can be an E-UTRA - NR cell resource coordination response.

Here, the network device can be e.g., an en-gNB, and the other network device can be e.g., an eNB for resource coordination with the en-gNB. Alternatively, the network device can be e.g., a gNB, and the other network device can be e.g., an ng-eNB for resource coordination with the gNB.

In an example, the first message can be a gNB-DU resource coordination request (or a new message defined for the purpose of resource coordination request), and the second message can be a gNB-DU resource coordination response (or a new message defined for the purpose of resource coordination response). Here, the gNB-DU resource coordination request as defined in 3GPP TS 38.473 can be used as the first message, with the direction of the message being changed into "gNB-DU to gNB-CU". The gNB-DU resource coordination request here may include an E-UTRA - NR Cell Resource Coordination Request Container IE, which contains an X2AP E-UTRA - NR CELL RESOURCE COORDINATION REQUEST defined in 3GPP TS 36.423 or an XnAP E-UTRA- NR CELL RESOURCE COORDINATION REQUEST defined in 3GPP TS 38.423. The X2AP E-UTRA - NR CELL RESOURCE COORDINATION REQUEST or the XnAP E-UTRA - NR CELL RESOURCE COORDINATION REQUEST may include a group identification (e.g., Spectrum Sharing Group ID) and a cell identification (e.g., E-UTRA Cell ID) indicating at least one cell involved in the resource coordination. Accordingly, the gNB-DU resource coordination response as defined in 3GPP TS 38.473 can be used as the second message, with the direction of the message being changed into "gNB-CU to gNB-DU". The gNB-DU resource coordination response here may include an E-UTRA - NR Cell Resource Coordination Response Container IE, which contains an X2 Application Protocol (X2AP) E-UTRA - NR CELL RESOURCE COORDINATION RESPONSE defined in 3GPP TS 36.423 or an XnAP E-UTRA - NR CELL RESOURCE COORDINATION RESPONSE defined in 3GPP TS 38.423.

Alternatively, the first message can be a gNB-DU resource coordination response (or a new message defined for the purpose of resource coordination request), and the second message can be a gNB-DU resource coordination request (or a new message defined for the purpose of resource coordination response). In this case, another gNB-DU resource coordination request can be transmitted to the DU, and the first message can be received as a response to the other gNB-DU resource coordination request. Here, the gNB-DU resource coordination response as defined in 3GPP TS 38.473 can be used as the first message. In an example, the gNB-DU resource coordination response here may include an E-UTRA - NR Cell Resource Coordination Request Container IE, which contains an X2AP E-UTRA - NR CELL RESOURCE COORDINATION REQUEST defined in 3GPP TS 36.423 or an XnAP E-UTRA - NR CELL RESOURCE COORDINATION REQUEST defined in 3GPP TS 38.423. The X2AP E-UTRA - NR CELL RESOURCE COORDINATION REQUEST or the XnAP E-UTRA - NR CELL RESOURCE COORDINATION REQUEST may include a group identification (e.g., Spectrum Sharing Group ID) and a cell identification (e.g., E-UTRA Cell ID) indicating at least one cell involved in the resource coordination. In another example, the gNB-DU resource coordination response here may include an E-UTRA - NR Cell Resource Coordination Response Container IE, which contains an X2AP E-UTRA - NR CELL RESOURCE COORDINATION RESPONSE defined in 3GPP TS 36.423 or an XnAP E-UTRA - NR CELL RESOURCE COORDINATION RESPONSE defined in 3GPP TS 38.423, for the purpose of E-UTRA - NR cell resource coordination request. In this case the CU can convert the X2AP E-UTRA - NR CELL RESOURCE COORDINATION RESPONSE or XnAP E-UTRA - NR CELL RESOURCE COORDINATION RESPONSE into an X2AP E-UTRA - NR CELL RESOURCE COORDINATION REQUEST or XnAP E-UTRA - NR CELL RESOURCE COORDINATION REQUEST, and set the IEs "Spectrum Sharing Group ID" and "List of E-UTRA Cells in NR Coordination Request" to appropriate values based on information maintained at the CU. Accordingly, the gNB-DU resource coordination request as defined in 3GPP TS 38.473 can be used as the second message. The gNB-DU resource coordination request here may include an E-UTRA - NR Cell Resource Coordination Response Container IE, which contains an X2AP E-UTRA - NR CELL RESOURCE COORDINATION RESPONSE defined in 3GPP TS 36.423 or an XnAP E-UTRA - NR CELL RESOURCE COORDINATION RESPONSE defined in 3GPP TS 38.423.

In an example, in response to receiving the first message, the CU can transmit, to the other network device, a third message containing the request for resource coordination with the other network device. For example, the third message can be an E-UTRA - NR cell resource coordination request message as described above in connection with Fig. 1B, e.g., it can be X2AP E-UTRA - NR CELL RESOURCE COORDINATION REQUEST or the XnAP E-UTRA - NR CELL RESOURCE COORDINATION REQUEST extracted or derived from the first message. The CU can then receiving, from the other network device, a fourth message containing the response to the request. Here, the second message can be transmitted in response to receiving the fourth message. For example, the four message can be an E-UTRA - NR cell resource coordination response message as described above in connection with Fig. 1B, e.g., it can be X2AP E-UTRA - NR CELL RESOURCE COORDINATION RESPONSE or XnAP E-UTRA - NR CELL RESOURCE COORDINATION RESPONSE that is to be contained in the second message. In another example, the CU can convert the X2AP E-UTRA - NR CELL RESOURCE COORDINATION RESPONSE or XnAP E-UTRA - NR CELL RESOURCE COORDINATION RESPONSE into an X2AP E-UTRA - NR CELL RESOURCE COORDINATION REQUEST or XnAP E-UTRA - NR CELL RESOURCE COORDINATION REQUEST so as to be contained in an E-UTRA-NR Cell Resource Coordination Request Container IE in the second message.

It is to be noted here that the eNB or ng-eNB is a non-limiting example of an embedded Radio Access Technology (RAT), and the CU and DU are a non-limiting example of a split RAT. The principles of the present disclosure can be applied to other embedded RATs and/or other split RATs.

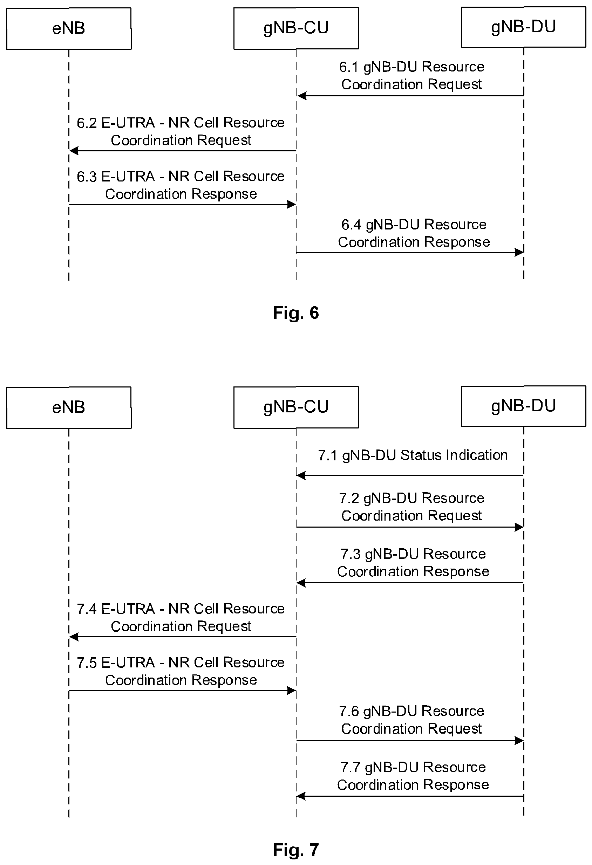

The above methods 400 and 500 will be further explained with reference to the examples shown in Figs. 6 and 7 below.

Fig. 6 is a sequence diagram of an example of a resource coordination procedure according to the present disclosure. As shown, at 6.1, a gNB-DU initiates a resource coordination procedure by sending a gNB-DU resource coordination request message to a gNB-CU over an F1 interface. In the gNB-DU resource coordination request message, the "Ignore Coordination Request Container" IE is not present, the "Request Type" IE is set to "execution", and the "E-UTRA - NR Cell Resource Coordination Request Container" IE contains an X2AP (or XnAP) E-UTRA - NR CELL RESOURCE COORDINATION REQUEST. At 6.2, the gNB-CU sends the X2AP (or XnAP) E-UTRA - NR CELL RESOURCE COORDINATION REQUEST to an eNB. At 6.3, the eNB replies with an X2AP (or XnAP) E-UTRA - NR CELL RESOURCE COORDINATION RESPONSE. At 6.4, the gNB-CU sends to the gNB-DU a gNB-DU resource coordination response message having an E-UTRA - NR Cell Resource Coordination Response Container IE containing the X2AP (or XnAP) E-UTRA- NR CELL RESOURCE COORDINATION RESPONSE. The procedure shown in Fig. 6 is highly efficient by allowing the gNB-DU to send the gNB-DU resource coordination request message and the gNB-CU to send the gNB-DU resource coordination response message.

Fig. 7 is a sequence diagram of another example of a resource coordination procedure according to the present disclosure. As shown, at 7.1, a gNB-DU sends a gNB-DU status indication message to a gNB-CU, indicating that the gNB-DU is overloaded. In this way, the gNB-DU initiates the resource coordination procedure. At 7.2, the gNB-CU sends a gNB-DU resource coordination request message to the gNB-DU. The "Ignore Coordination Request Container" IE is present in the gNB-DU resource coordination request message and is set to 'yes'. At 7.3, the gNB-DU replies with a gNB-DU resource coordination response message having an "E-UTRA - NR Cell Resource Coordination Request Container" IE containing an X2AP (or XnAP) E-UTRA - NR CELL RESOURCE COORDINATION REQUEST. At 7.4, the gNB-CU sends the X2AP (or XnAP) E-UTRA - NR CELL RESOURCE COORDINATION REQUEST to an eNB. At 7.5, the eNB replies with an X2AP (or XnAP) E-UTRA- NR CELL RESOURCE COORDINATION RESPONSE. At 7.6, the gNB-CU sends to the gNB-DU a gNB-DU resource coordination request message having an "E-UTRA-NR Cell Resource Coordination Response Container IE" containing the X2AP (or XnAP) E-UTRA - NR CELL RESOURCE COORDINATION RESPONSE. In the gNB-DU resource coordination request message, the "Ignore Coordination Request Container" IE is not present, and the "Request Type" IE is set to "execution". At 7.7, the gNB-DU replies with a gNB-DU resource coordination response message. The procedure shown in Fig. 7 requires no change in the directions of the gNB-DU resource coordination request message and the gNB-DU resource coordination response message as defined in 3GPP TS 38.473.

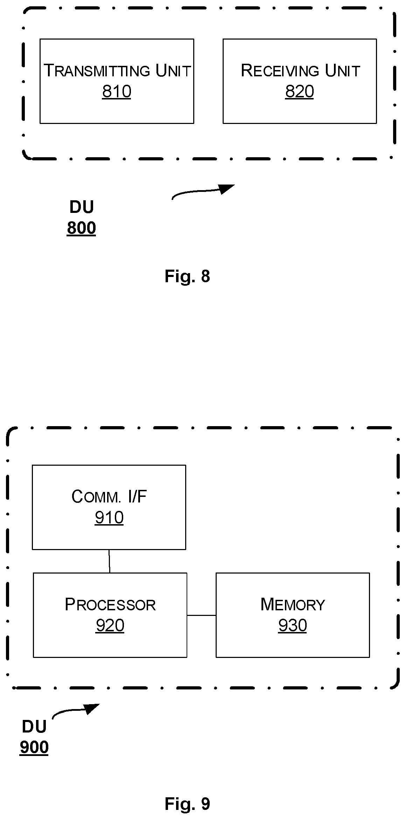

Correspondingly to the method 400 as described above, a DU is provided. Fig. 8 is a block diagram of a DU 800 of a network device according to an embodiment of the present disclosure.

The DU 800 can be configured to perform the method 400 as described above in connection with Fig. 4. As shown in Fig. 8, the DU 800 includes a transmitting unit 810 configured to transmit, to a CU of the network device, a first message containing a request for resource coordination with another network device. The DU 800 further includes a receiving unit 820 configured to receive, from the CU, a second message containing a response to the request from the other network device.

In an embodiment, the first message may be gNB-DU resource coordination request, and the second message may be a gNB-DU resource coordination response.

In an embodiment, the first message may be a gNB-DU resource coordination response, and the second message may be a gNB-DU resource coordination request.

In an embodiment, the first message may be transmitted in response to another gNB-DU resource coordination request from the CU.

In an embodiment, the request may be an E-UTRA - NR cell resource coordination request, and the response may be an E-UTRA - NR cell resource coordination response.

In an embodiment, the other network device may include an eNB for resource coordination with a gNB as the network device.

In an embodiment, the first message may contain a group identification and a cell identification indicating at least one cell involved in the resource coordination.

The above unit 810 and 820 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 4.

Fig. 9 is a block diagram of a DU 900 of a network device according to another embodiment of the present disclosure.

The DU 900 includes a communication interface 910, a processor 920 and a memory 930.

The memory 930 can contain instructions executable by the processor 920 whereby the DU 900 is operative to perform the actions, e.g., of the procedure described earlier in conjunction with Fig. 4. Particularly, the memory 930 can contain instructions executable by the processor 920 whereby the DU 900 is operative to: transmit, to a CU of the network device, a first message containing a request for resource coordination with another network device; and receive, from the CU, a second message containing a response to the request from the other network device.

In an embodiment, the first message may be gNB-DU resource coordination request, and the second message may be a gNB-DU resource coordination response.

In an embodiment, the first message may be a gNB-DU resource coordination response, and the second message may be a gNB-DU resource coordination request.

In an embodiment, the first message may be transmitted in response to another gNB-DU resource coordination request from the CU.

In an embodiment, the request may be an E-UTRA - NR cell resource coordination request, and the response may be an E-UTRA - NR cell resource coordination response.

In an embodiment, the other network device may include an eNB for resource coordination with a gNB as the network device.

In an embodiment, the first message may contain a group identification and a cell identification indicating at least one cell involved in the resource coordination.

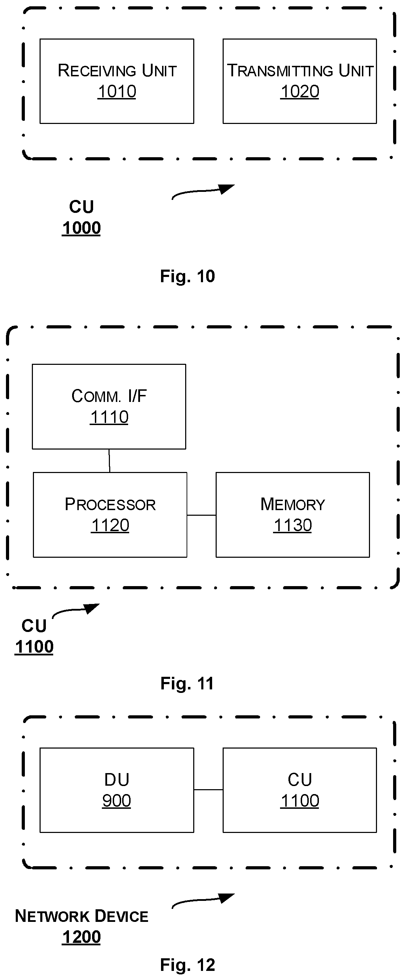

Correspondingly to the method 500 as described above, a CU is provided. Fig. 10 is a block diagram of a CU 1000 of a network device according to an embodiment of the present disclosure.

The CU 1000 can be configured to perform the method 500 as described above in connection with Fig. 5. As shown in Fig. 10, the CU 1000 includes a receiving unit 1010 configured to receive, from a DU of the network device, a first message containing a request for resource coordination with another network device. The CU 1000 further includes a transmitting unit 1020 configured to transmit, to the DU, a second message containing a response to the request from the other network device.

In an embodiment, the transmitting unit 1020 can be further configured to transmit, to the other network device, a third message containing the request for resource coordination with the other network device, in response to receiving the first message. The receiving unit 1010 can be further configured to receive, from the other network device, a fourth message containing the response to the request. The second message may be transmitted in response to receiving the fourth message.

In an embodiment, the first message may be a gNB-DU resource coordination request, and the second message may be a gNB-DU resource coordination response.

In an embodiment, the first message may be a gNB-DU resource coordination response, and the second message may be a gNB-DU resource coordination request.

In an embodiment, the transmitting unit 1020 can be further configured to transmit, to the DU, another gNB-DU resource coordination request. The first message may be received as a response to the other gNB-DU resource coordination request.

In an embodiment, the request may be an E-UTRA - NR cell resource coordination request, and the response may be an E-UTRA - NR cell resource coordination response.

In an embodiment, the other network device may include an eNB for resource coordination with a gNB as the network device.

In an embodiment, the first message may contain a group identification and a cell identification indicating at least one cell involved in the resource coordination.

The above units 1010 and 1020 can be implemented as a pure hardware solution or as a combination of software and hardware, e.g., by one or more of: a processor or a micro-processor and adequate software and memory for storing of the software, a Programmable Logic Device (PLD) or other electronic component(s) or processing circuitry configured to perform the actions described above, and illustrated, e.g., in Fig. 5.

Fig. 11 is a block diagram of a CU 1100 of a network device according to another embodiment of the present disclosure.

The CU 1100 includes a communication interface 1110, a processor 1120 and a memory 1130.

The memory 1130 can contain instructions executable by the processor 1120 whereby the CU 1100 is operative to perform the actions, e.g., of the procedure described earlier in conjunction with Fig. 5. Particularly, the memory 1130 can contain instructions executable by the processor 1120 whereby the CU 1100 is operative to: receive, from a DU of the network device, a first message containing a request for resource coordination with another network device; and transmit, to the DU, a second message containing a response to the request from the other network device.

In an embodiment, the memory 1130 may further contain instructions executable by the processor 1120 whereby the CU 1100 is operative to: transmit, to the other network device, a third message containing the request for resource coordination with the other network device, in response to receiving the first message; and receive, from the other network device, a fourth message containing the response to the request. The second message may be transmitted in response to receiving the fourth message.

In an embodiment, the first message may be a gNB-DU resource coordination request, and the second message may be a gNB-DU resource coordination response.

In an embodiment, the first message may be a gNB-DU resource coordination response, and the second message may be a gNB-DU resource coordination request.

In an embodiment, the memory 1130 can contain instructions executable by the processor 1120 whereby the CU 1100 is operative to: transmit, to the DU, another gNB-DU resource coordination request. The first message may be received as a response to the other gNB-DU resource coordination request.

In an embodiment, the request may be an E-UTRA - NR cell resource coordination request, and the response may be an E-UTRA - NR cell resource coordination response.

In an embodiment, the other network device may include an eNB for resource coordination with a gNB as the network device.

In an embodiment, the first message may contain a group identification and a cell identification indicating at least one cell involved in the resource coordination.

Fig. 12 is a block diagram of a network device 1200 according to an embodiment of the present disclosure. The network device 1200 may include the DU 900 in Fig. 9 (or the DU 800 in Fig. 8) and the CU 1100 in Fig. 11 (or the CU 1000 in Fig. 10). The network device 1200 can be e.g., a gNB or an en-gNB.

The present disclosure also provides at least one computer program product in the form of a non-volatile or volatile memory, e.g., a non-transitory computer readable storage medium, an Electrically Erasable Programmable Read-Only Memory (EEPROM), a flash memory and a hard drive. The computer program product includes a computer program. The computer program includes: code/computer readable instructions, which when executed by the processor 920 causes the DU 900 to perform the actions, e.g., of the procedure described earlier in conjunction with Fig. 4; or code/computer readable instructions, which when executed by the processor 1120 causes the CU 1100 to perform the actions, e.g., of the procedure described earlier in conjunction with Fig. 5.

The computer program product may be configured as a computer program code structured in computer program modules. The computer program modules could essentially perform the actions of the flow illustrated in any of Figs. 4 and 5.

The processor may be a single CPU (Central Processing Unit), but could also comprise two or more processing units. For example, the processor may include general purpose microprocessors; instruction set processors and/or related chips sets and/or special purpose microprocessors such as Application Specific Integrated Circuits (ASICs). The processor may also comprise board memory for caching purposes. The computer program may be carried by a computer program product connected to the processor. The computer program product may comprise a non-transitory computer readable storage medium on which the computer program is stored. For example, the computer program product may be a flash memory, a Random Access Memory (RAM), a Read-Only Memory (ROM), or an EEPROM, and the computer program modules described above could in alternative embodiments be distributed on different computer program products in the form of memories.

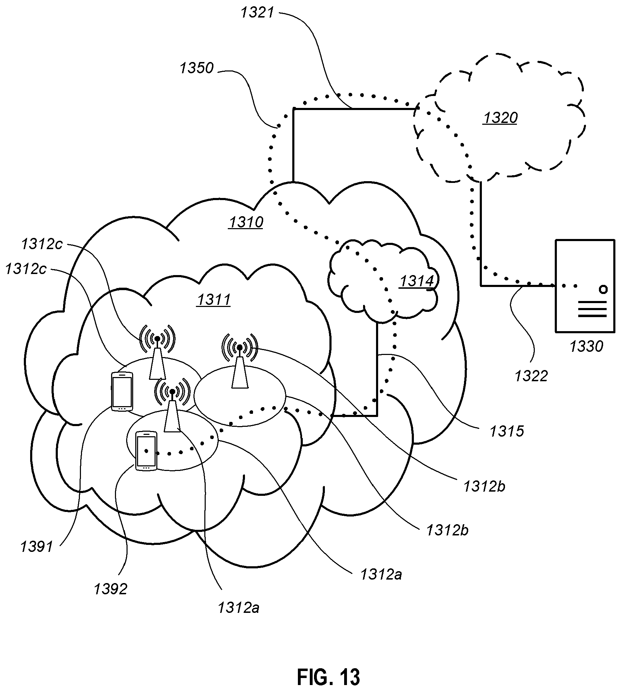

With reference to Fig. 13, in accordance with an embodiment, a communication system includes a telecommunication network 1310, such as a 3GPP-type cellular network, which comprises an access network 1311, such as a radio access network, and a core network 1314. The access network 1311 comprises a plurality of base stations 1312a, 1312b, 1312c, such as NBs, eNBs, gNBs or other types of wireless access points, each defining a corresponding coverage area 1312a, 1312b, 1312c. Each base station 1312a, 1312b, 1312c is connectable to the core network 1314 over a wired or wireless connection 1315. A first UE 1391 located in a coverage area 1312c is configured to wirelessly connect to, or be paged by, the corresponding base station 1312c. A second UE 1392 in a coverage area 1312a is wirelessly connectable to the corresponding base station 1312a. While a plurality of UEs 1391, 1392 are illustrated in this example, the disclosed embodiments are equally applicable to a situation where a sole UE is in the coverage area or where a sole UE is connecting to the corresponding base station 1312.

The telecommunication network 1310 is itself connected to a host computer 1330, which may be embodied in the hardware and/or software of a standalone server, a cloud-implemented server, a distributed server or as processing resources in a server farm. The host computer 1330 may be under the ownership or control of a service provider, or may be operated by the service provider or on behalf of the service provider. Connections 1321 and 1322 between the telecommunication network 1310 and the host computer 1330 may extend directly from the core network 1314 to the host computer 1330 or may go via an optional intermediate network 1320. An intermediate network 1320 may be one of, or a combination of more than one of, a public, private or hosted network; the intermediate network 1320, if any, may be a backbone network or the Internet; in particular, the intermediate network 1320 may comprise two or more sub-networks (not shown).

The communication system of Fig. 13 as a whole enables connectivity between the connected UEs 1391, 1392 and the host computer 1330. The connectivity may be described as an over-the-top (OTT) connection 1350. The host computer 1330 and the connected UEs 1391, 1392 are configured to communicate data and/or signaling via the OTT connection 1350, using the access network 1311, the core network 1314, any intermediate network 1320 and possible further infrastructure (not shown) as intermediaries. The OTT connection 1350 may be transparent in the sense that the participating communication devices through which the OTT connection 1350 passes are unaware of routing of uplink and downlink communications. For example, the base station 1312 may not or need not be informed about the past routing of an incoming downlink communication with data originating from the host computer 1330 to be forwarded (e.g., handed over) to a connected UE 1391. Similarly, the base station 1312 need not be aware of the future routing of an outgoing uplink communication originating from the UE 1391 towards the host computer 1330.

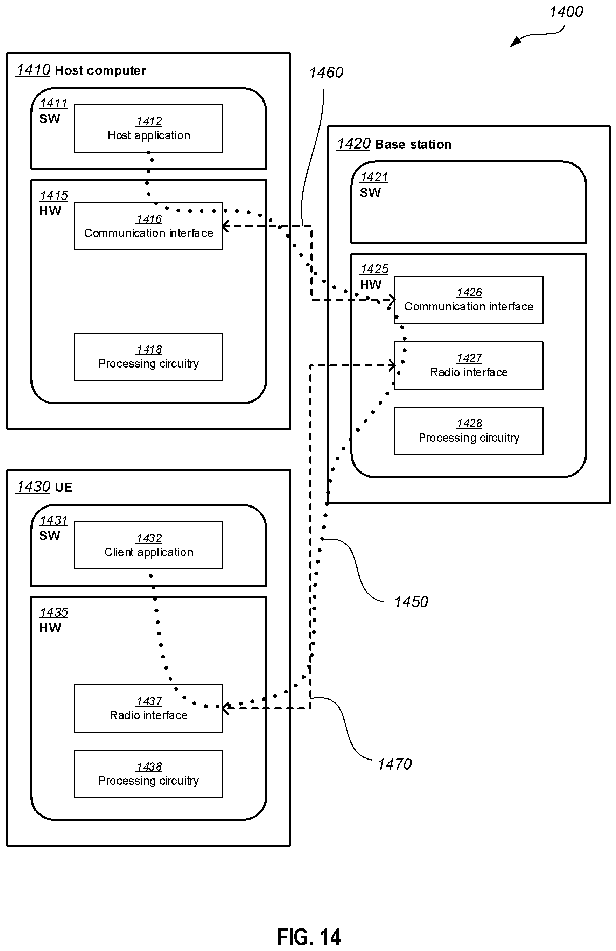

Example implementations, in accordance with an embodiment, of the UE, base station and host computer discussed in the preceding paragraphs will now be described with reference to Fig. 14. In a communication system 1400, a host computer 1410 comprises hardware 1415 including a communication interface 1416 configured to set up and maintain a wired or wireless connection with an interface of a different communication device of the communication system 1400. The host computer 1410 further comprises a processing circuitry 1418, which may have storage and/or processing capabilities. In particular, the processing circuitry 1418 may comprise one or more programmable processors, application-specific integrated circuits, field programmable gate arrays or combinations of these (not shown) adapted to execute instructions. The host computer 1410 further comprises software 1411, which is stored in or accessible by the host computer 1410 and executable by the processing circuitry 1418. The software 1411 includes a host application 1412. The host application 1412 may be operable to provide a service to a remote user, such as UE 1430 connecting via an OTT connection 1450 terminating at the UE 1430 and the host computer 1410. In providing the service to the remote user, the host application 1412 may provide user data which is transmitted using the OTT connection 1450.

The communication system 1400 further includes a base station 1420 provided in a telecommunication system and comprising hardware 1425 enabling it to communicate with the host computer 1410 and with the UE 1430. The hardware 1425 may include a communication interface 1426 for setting up and maintaining a wired or wireless connection with an interface of a different communication device of the communication system 1400, as well as a radio interface 1427 for setting up and maintaining at least a wireless connection 1470 with the UE 1430 located in a coverage area (not shown in Fig. 14) served by the base station 1420. The communication interface 1426 may be configured to facilitate a connection 1460 to the host computer 1410. The connection 1460 may be direct or it may pass through a core network (not shown in Fig. 14) of the telecommunication system and/or through one or more intermediate networks outside the telecommunication system. In the embodiment shown, the hardware 1425 of the base station 1420 further includes a processing circuitry 1428, which may comprise one or more programmable processors, application-specific integrated circuits, field programmable gate arrays or combinations of these (not shown) adapted to execute instructions. The base station 1420 further has software 1421 stored internally or accessible via an external connection.

The communication system 1400 further includes the UE 1430 already referred to. Its hardware 1435 may include a radio interface 1437 configured to set up and maintain a wireless connection 1470 with a base station serving a coverage area in which the UE 1430 is currently located. The hardware 1435 of the UE 1430 further includes a processing circuitry 1438, which may comprise one or more programmable processors, application-specific integrated circuits, field programmable gate arrays or combinations of these (not shown) adapted to execute instructions. The UE 1430 further comprises software 1431, which is stored in or accessible by the UE 1430 and executable by the processing circuitry 1438. The software 1431 includes a client application 1432. The client application 1432 may be operable to provide a service to a human or non-human user via the UE 1430, with the support of the host computer 1410. In the host computer 1410, an executing host application 1412 may communicate with the executing client application 1432 via the OTT connection 1450 terminating at the UE 1430 and the host computer 1410. In providing the service to the user, the client application 1432 may receive request data from the host application 1412 and provide user data in response to the request data. The OTT connection 1450 may transfer both the request data and the user data. The client application 1432 may interact with the user to generate the user data that it provides.

It is noted that the host computer 1410, the base station 1420 and the UE 1430 illustrated in Fig. 14 may be similar or identical to the host computer 1330, one of base stations 1312a, 1312b, 1312c and one of UEs 1391, 1392 of Fig. 13, respectively. This is to say, the inner workings of these entities may be as shown in Fig. 14 and independently, the surrounding network topology may be that of Fig. 13.

In Fig. 14, the OTT connection 1450 has been drawn abstractly to illustrate the communication between the host computer 1410 and the UE 1430 via the base station 1420, without explicit reference to any intermediary devices and the precise routing of messages via these devices. Network infrastructure may determine the routing, which it may be configured to hide from the UE 1430 or from the service provider operating the host computer 1410, or both. While the OTT connection 1450 is active, the network infrastructure may further take decisions by which it dynamically changes the routing (e.g., on the basis of load balancing consideration or reconfiguration of the network).

Wireless connection 1470 between the UE 1430 and the base station 1420 is in accordance with the teachings of the embodiments described throughout this disclosure. One or more of the various embodiments improve the performance of OTT services provided to the UE 1430 using the OTT connection 1450, in which the wireless connection 1470 forms the last segment. More precisely, the teachings of these embodiments may improve resource coordination efficiency, and thereby provide benefits such as reduced user waiting time.

A measurement procedure may be provided for the purpose of monitoring data rate, latency and other factors on which the one or more embodiments improve. There may further be an optional network functionality for reconfiguring the OTT connection 1450 between the host computer 1410 and the UE 1430, in response to variations in the measurement results. The measurement procedure and/or the network functionality for reconfiguring the OTT connection 1450 may be implemented in software 1411 and hardware 1415 of the host computer 1410 or in software 1431 and hardware 1435 of the UE 1430, or both. In embodiments, sensors (not shown) may be deployed in or in association with communication devices through which the OTT connection 1450 passes; the sensors may participate in the measurement procedure by supplying values of the monitored quantities exemplified above, or supplying values of other physical quantities from which the software 1411, 1431 may compute or estimate the monitored quantities. The reconfiguring of the OTT connection 1450 may include message format, retransmission settings, preferred routing etc.; the reconfiguring need not affect the base station 1420, and it may be unknown or imperceptible to the base station 1420. Such procedures and functionalities may be known and practiced in the art. In certain embodiments, measurements may involve proprietary UE signaling facilitating the host computer 1410's measurements of throughput, propagation times, latency and the like. The measurements may be implemented in that the software 1411 and 1431 causes messages to be transmitted, in particular empty or 'dummy' messages, using the OTT connection 1450 while it monitors propagation times, errors etc.

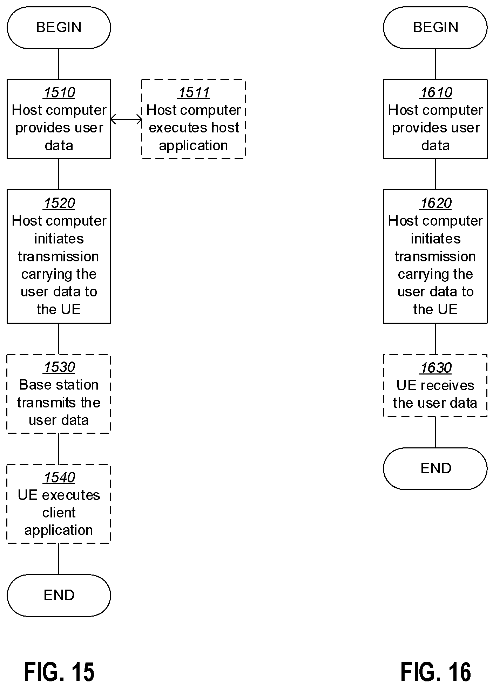

Fig. 15 is a flowchart illustrating a method implemented in a communication system, in accordance with an embodiment. The communication system includes a host computer, a base station and a UE which may be those described with reference to Fig. 13 and Fig. 14. For simplicity of the present disclosure, only drawing references to Fig. 15 will be included in this section. In step 1510, the host computer provides user data. In substep 1511 (which may be optional) of step 1510, the host computer provides the user data by executing a host application. In step 1520, the host computer initiates a transmission carrying the user data to the UE. In step 1530 (which may be optional), the base station transmits to the UE the user data which was carried in the transmission that the host computer initiated, in accordance with the teachings of the embodiments described throughout this disclosure. In step 1540 (which may also be optional), the UE executes a client application associated with the host application executed by the host computer.

Fig. 16 is a flowchart illustrating a method implemented in a communication system, in accordance with an embodiment. The communication system includes a host computer, a base station and a UE which may be those described with reference to Fig. 13 and Fig. 14. For simplicity of the present disclosure, only drawing references to Fig. 16 will be included in this section. In step 1610 of the method, the host computer provides user data. In an optional substep (not shown) the host computer provides the user data by executing a host application. In step 1620, the host computer initiates a transmission carrying the user data to the UE. The transmission may pass via the base station, in accordance with the teachings of the embodiments described throughout this disclosure. In step 1630 (which may be optional), the UE receives the user data carried in the transmission.

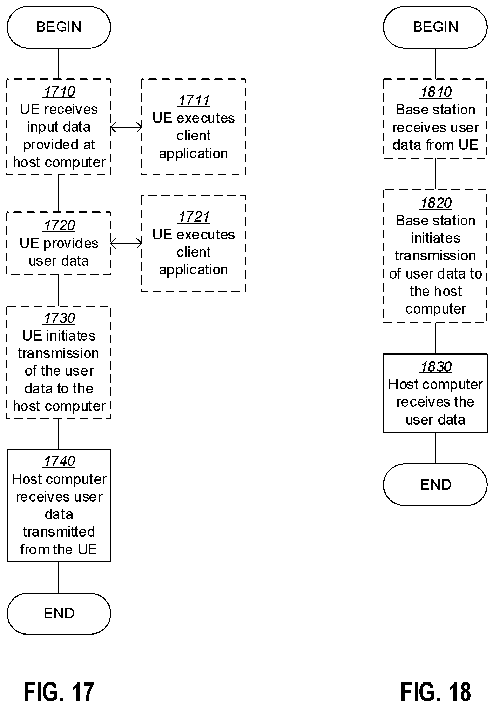

Fig. 17 is a flowchart illustrating a method implemented in a communication system, in accordance with an embodiment. The communication system includes a host computer, a base station and a UE which may be those described with reference to Fig. 13 and Fig. 14. For simplicity of the present disclosure, only drawing references to Fig. 17 will be included in this section. In step 1710 (which may be optional), the UE receives input data provided by the host computer. Additionally or alternatively, in step 1720, the UE provides user data. In substep 1721 (which may be optional) of step 1720, the UE provides the user data by executing a client application. In substep 1711 (which may be optional) of step 1710, the UE executes a client application which provides the user data in reaction to the received input data provided by the host computer. In providing the user data, the executed client application may further consider user input received from the user. Regardless of the specific manner in which the user data was provided, the UE initiates, in substep 1730 (which may be optional), transmission of the user data to the host computer. In step 1740 of the method, the host computer receives the user data transmitted from the UE, in accordance with the teachings of the embodiments described throughout this disclosure.

Fig. 18 is a flowchart illustrating a method implemented in a communication system, in accordance with an embodiment. The communication system includes a host computer, a base station and a UE which may be those described with reference to Fig. 13 and Fig. 14. For simplicity of the present disclosure, only drawing references to Fig. 18 will be included in this section. In step 1810 (which may be optional), in accordance with the teachings of the embodiments described throughout this disclosure, the base station receives user data from the UE. In step 1820 (which may be optional), the base station initiates transmission of the received user data to the host computer. In step 1830 (which may be optional), the host computer receives the user data carried in the transmission initiated by the base station.

The disclosure has been described above with reference to embodiments thereof. It should be understood that various modifications, alternations and additions can be made by those skilled in the art without departing from the scope of the disclosure. Therefore, the scope of the disclosure is not limited to the above particular embodiments but only defined by the claims as attached.

## Claims

1. A method (400) performed by a Distributed Unit, DU, of a network device that is a next generation NodeB, gNB, comprising:
transmitting (410), to a Central Unit, CU, of the network device, a first message containing a request for resource coordination with another network device that is an evolved NodeB, eNB; and
receiving (420), from the CU, a second message containing a response to the request from the other network device,
wherein the resource coordination is gNB-DU initiated.

2. The method (400) of claim 1, wherein the first message is a next generation NodeB 'gNB' - DU resource coordination request, and the second message is a gNB-DU resource coordination response.

3. The method (400) of claim 1, wherein the first message is a next generation NodeB 'gNB' - DU resource coordination response, and the second message is a gNB-DU resource coordination request.

4. The method (400) of claim 3, wherein the first message is transmitted in response to another gNB-DU resource coordination request from the CU.

5. The method (400) of any of claims 1-4, wherein the request is an Evolved Universal Terrestrial Radio Access 'E-UTRA' - New Radio 'NR' cell resource coordination request, and the response is an E-UTRA - NR cell resource coordination response.

6. The method (400) of any of claims 1-5, wherein the first message contains a group identification and a cell identification indicating at least one cell involved in the resource coordination.

7. A method (500) performed by a Central Unit, CU, of a network device that is a next generation NodeB, gNB, comprising:
receiving (510), from a Distributed Unit, DU, of the network device, a first message containing a request for resource coordination with another network device that is an evolved NodeB, eNB; and
transmitting (520), to the DU, a second message containing a response to the request from the other network device, wherein the method further comprises:
transmitting, to the other network device, a third message containing the request for resource coordination with the other network device, in response to receiving the first message; and
receiving, from the other network device, a fourth message containing the response to the request,
wherein the second message is transmitted in response to receiving the fourth message.

8. The method (500) of claim 7, wherein the first message is a next generation NodeB 'gNB' - DU resource coordination request, and the second message is a gNB-DU resource coordination response.

9. The method (500) of claim 7, wherein the first message is a next generation NodeB 'gNB' - DU resource coordination response, and the second message is a gNB-DU resource coordination request.

10. The method (500) of claim 9, further comprising:
transmitting, to the DU, another gNB-DU resource coordination request,
wherein the first message is received as a response to the other gNB-DU resource coordination request.

11. The method (500) of any of claims 7-10, wherein the request is an Evolved Universal Terrestrial Radio Access 'E-UTRA' - New Radio 'NR' cell resource coordination request, and the response is an E-UTRA - NR cell resource coordination response.

12. The method (500) of any of claims 7-11, wherein the first message contains a group identification and a cell identification indicating at least one cell involved in the resource coordination.

13. A Distributed Unit, DU, (900) comprising a communication interface (910), a processor (920) and a memory (930), the memory (930) comprising instructions executable by the processor (920) whereby the DU (900) is operative to perform the method according to any of claims 1-6.

14. A computer readable storage medium having computer program instructions stored thereon, the computer program instructions, when executed by a processor in a Distributed Unit, DU, causing the DU to perform the method according to any of claims 1-6.

15. A Central Unit, CU, (1100) comprising a communication interface (1110), a processor (1120) and a memory (1130), the memory (1130) comprising instructions executable by the processor (1120) whereby the CU (1100) is operative to perform the method according to any of claims 7-12.

16. A computer readable storage medium having computer program instructions stored thereon, the computer program instructions, when executed by a processor in a Central Unit, CU, causing the CU to perform the method according to any of claims 7-12.

17. A network device (1200), comprising a Distributed Unit, DU, (900) according to claim 13 and a Central Unit, CU, (1100) according to claim 15.

## Patentansprüche

1. Verfahren (400), das von einer verteilten Einheit, DU, einer Netzwerkvorrichtung durchgeführt wird, bei der es sich um einen NodeB der nächsten Generation, gNB, handelt, umfassend:
Senden (410) einer ersten Nachricht, die eine Anforderung für Ressourcenkoordination mit einer anderen Netzwerkvorrichtung enthält, bei der es sich um einen evolvierten NodeB, eNB, handelt, an eine zentrale Einheit, CU, der Netzwerkvorrichtung; und
Empfangen (420) einer zweiten Nachricht, die eine Antwort auf die Anforderung von der anderen Netzwerkvorrichtung enthält, von der CU,
wobei die Ressourcenkoordination von der gNB-DU initiiert wird.

2. Verfahren (400) nach Anspruch 1, wobei die erste Nachricht eine Ressourcenkoordinationsanforderung der DU des NodeB der nächsten Generation, gNB, ist und die zweite Nachricht eine gNB-DU-Ressourcenkoordinationsantwort ist.

3. Verfahren (400) nach Anspruch 1, wobei die erste Nachricht eine Ressourcenkoordinationsantwort der DU des NodeB der nächsten Generation, gNB, ist und die zweite Nachricht eine gNB-DU-Ressourcenkoordinationsanforderung ist.

4. Verfahren (400) nach Anspruch 3, wobei die erste Nachricht als Antwort auf eine Ressourcenkoordinationsanforderung der DU des anderen gNB von der CU gesendet wird.

5. Verfahren (400) nach einem der Ansprüche 1-4, wobei die Anforderung eine Ressourcenkoordinationsanforderung einer New Radio-Zelle, NR-Zelle, mit evolviertem universellem terrestrischem Funkzugang, E-UTRA, ist und die Antwort eine Ressourcenkoordinationsantwort einer E-UTRA-NR-Zelle ist.

6. Verfahren (400) nach einem der Ansprüche 1-5, wobei die erste Nachricht eine Gruppenidentifikation und eine Zellenidentifikation enthält, die mindestens eine Zelle anzeigt, die an der Ressourcenkoordination beteiligt ist.

7. Verfahren (500), das von einer zentralen Einheit, CU, einer Netzwerkvorrichtung durchgeführt wird, bei der es sich um einen NodeB der nächsten Generation, gNB, handelt, umfassend:
Empfangen (510) einer ersten Nachricht, die eine Anforderung für Ressourcenkoordination mit einer anderen Netzwerkvorrichtung enthält, bei der es sich um einen evolvierten NodeB, eNB, handelt, von einer verteilten Einheit, DU, der Netzwerkvorrichtung; und
Senden (520) einer zweiten Nachricht, die eine Antwort auf die Anforderung von der anderen Netzwerkvorrichtung enthält, an die DU, wobei das Verfahren ferner Folgendes umfasst:
Senden einer dritten Nachricht, die die Anforderung für Ressourcenkoordination mit der anderen Netzwerkvorrichtung enthält, an die andere Netzwerkvorrichtung als Antwort auf den Empfang der ersten Nachricht; und
Empfangen einer vierten Nachricht, die die Antwort auf die Anforderung enthält, von der anderen Netzwerkvorrichtung,
wobei die zweite Nachricht als Antwort auf den Empfang der vierten Nachricht gesendet wird.

8. Verfahren (500) nach Anspruch 7, wobei die erste Nachricht eine Ressourcenkoordinationsanforderung des NodeB der nächsten Generation, gNB, ist und die zweite Nachricht eine gNB-DU-Ressourcenkoordinationsantwort ist.

9. Verfahren (500) nach Anspruch 7, wobei die erste Nachricht eine Ressourcenkoordinationsantwort der DU des NodeB der nächsten Generation, gNB, ist und die zweite Nachricht eine gNB-DU-Ressourcenkoordinationsanforderung ist.

10. Verfahren (500) nach Anspruch 9, ferner umfassend:
Senden einer Ressourcenkoordinationsanforderung einer DU des anderen gNB an die DU, wobei die erste Nachricht als Antwort auf die Ressourcenkoordinationsanforderung der DU des anderen gNB empfangen wird.

11. Verfahren (500) nach einem der Ansprüche 7-10, wobei die Anforderung eine Ressourcenkoordinationsanforderung einer New Radio-Zelle, NR-Zelle, mit evolviertem universellem terrestrischem Funkzugang, E-UTRA, ist und die Antwort eine Ressourcenkoordinationsantwort einer E-UTRA-NR-Zelle ist.

12. Verfahren (500) nach einem der Ansprüche 7-11, wobei die erste Nachricht eine Gruppenidentifikation und eine Zellenidentifikation enthält, die mindestens eine Zelle anzeigt, die an der Ressourcenkoordination beteiligt ist.

13. Verteilte Einheit, DU, (900), umfassend eine Kommunikationsschnittstelle (910), einen Prozessor (920) und einen Speicher (930), wobei der Speicher (930) Anweisungen umfasst, die von dem Prozessor (920) ausgeführt werden können, wodurch die DU (900) zum Durchführen des Verfahrens nach einem der Ansprüche 1-6 ausgelegt ist.

14. Computerlesbares Speichermedium mit darauf gespeicherten Computerprogrammanweisungen, wobei die Computerprogrammanweisungen bei Ausführung durch einen Prozessor in einer verteilten Einheit, DU, die DU zum Durchführen des Verfahrens nach einem der Ansprüche 1-6 veranlassen.

15. Zentrale Einheit, CU, (1100), umfassend eine Kommunikationsschnittstelle (1110), einen Prozessor (1120) und einen Speicher (1130), wobei der Speicher (1130) Anweisungen umfasst, die von dem Prozessor (1120) ausgeführt werden können, wodurch die CU (1100) zum Durchführen des Verfahrens nach einem der Ansprüche 7-12 ausgelegt ist.

16. Computerlesbares Speichermedium mit darauf gespeicherten Computerprogrammanweisungen, wobei die Computerprogrammanweisungen bei Ausführung durch einen Prozessor in einer zentralen Einheit, CU, die CU zum Durchführen des Verfahrens nach einem der Ansprüche 7-12 veranlassen.

17. Netzwerkvorrichtung (1200), umfassend eine verteilte Einheit, DU, (900) nach Anspruch 13 und eine zentrale Einheit, CU, (1100) nach Anspruch 15.

## Revendications

1. Procédé (400) réalisé par une unité distribuée, DU, d'un dispositif de réseau qui est un NodeB de prochaine génération, gNB, comprenant :
la transmission (410), à une unité centrale, CU, du dispositif de réseau, d'un premier message contenant une demande de coordination de ressources avec un autre dispositif de réseau qui est un NodeB évolué, eNB ; et
la réception (420), depuis la CU, d'un deuxième message contenant une réponse à la demande depuis l'autre dispositif de réseau,
dans lequel la coordination de ressources est initiée par la gNB-DU.

2. Procédé (400) selon la revendication 1, dans lequel le premier message est une demande de coordination de ressources de DU de NodeB de prochaine génération, gNB, et le deuxième message est une réponse de coordination de ressources de gNB-DU.

3. Procédé (400) selon la revendication 1, dans lequel le premier message est une réponse de coordination de ressources de DU de NodeB de prochaine génération, gNB, et le deuxième message est une demande de coordination de ressources de gNB-DU.

4. Procédé (400) selon la revendication 3, dans lequel le premier message est transmis en réponse à une autre demande de coordination de ressources de gNB-DU provenant de la CU.

5. Procédé (400) selon l'une quelconque des revendication 1 à 4, dans lequel la demande est une demande de coordination de ressources de cellule d'accès radio terrestre universel évolué, E-UTRA, - nouvelle radio, NR, et la réponse est une réponse de coordination de ressources de cellules E-UTRA - NR.

6. Procédé (400) selon l'une quelconque des revendication 1 à 5, dans lequel le premier message contient une identification de groupe et une identification de cellule indiquant au moins une cellule impliquée dans la coordination de ressources.

7. Procédé (500) réalisé par une unité centrale, CU, d'un dispositif de réseau qui est un NodeB de prochaine génération, gNB, comprenant :
la réception (510), depuis une unité distribuée, DU, du dispositif de réseau, d'un premier message contenant une demande de coordination de ressources avec un autre dispositif de réseau qui est un NodeB évolué, eNB ; et
la transmission (520), à la DU, d'un deuxième message contenant une réponse à la demande depuis l'autre dispositif de réseau, dans lequel le procédé comprend en outre :
la transmission, à l'autre dispositif de réseau, d'un troisième message contenant la demande de coordination de ressources avec l'autre dispositif de réseau, en réponse à la réception du premier message ; et
la réception, depuis l'autre dispositif de réseau, d'un quatrième message contenant la réponse à la demande,
dans lequel le deuxième message est transmis en réponse à la réception du quatrième message.

8. Procédé (500) selon la revendication 7, dans lequel le premier message est une demande de coordination de ressources de DU de NodeB de prochaine génération, gNB, et le deuxième message est une réponse de coordination de ressources de gNB-DU.

9. Procédé (500) selon la revendication 7, dans lequel le premier message est une réponse de coordination de ressources de DU de NodeB de prochaine génération, gNB, et le deuxième message est une demande de coordination de ressources de gNB-DU.

10. Procédé (500) selon la revendication 9, comprenant en outre :
la transmission, à la DU, d'une autre demande de coordination de ressources de gNB-DU, dans lequel le premier message est reçu en réponse à l'autre demande de coordination de ressources de gNB-DU.

11. Procédé (500) selon l'une quelconque des revendication 7 à 10, dans lequel la demande est une demande de coordination de ressources de cellule d'accès radio terrestre universel évolué, E-UTRA, - nouvelle radio, NR, et la réponse est une réponse de coordination de ressources de cellules E-UTRA - NR.

12. Procédé (500) selon l'une quelconque des revendication 7 à 11, dans lequel le premier message contient une identification de groupe et une identification de cellule indiquant au moins une cellule impliquée dans la coordination de ressources.

13. Unité distribuée, DU, (900) comprenant une interface de communication (910), un processeur (920) et une mémoire (930), la mémoire (930) comprenant des instructions exécutables par le processeur (920) selon lesquelles la DU (900) est fonctionnelle pour réaliser le procédé selon l'une quelconque des revendications 1 à 6.

14. Support de stockage lisible par ordinateur sur lequel sont stockées des instructions de programme informatique, les instructions de programmes informatiques, lorsqu'elles sont exécutées par un processeur dans une unité distribuée, DU, amenant la DU à réaliser le procédé selon l'une quelconque des revendications 1 à 6.

15. Unité centrale, CU, (1100) comprenant une interface de communication (1110), un processeur (1120) et une mémoire (1130), la mémoire (1130) comprenant des instructions exécutables par le processeur (1120) selon lesquelles la CU (1100) est fonctionnelle pour réaliser le procédé selon l'une quelconque des revendications 7 à 12.

16. Support de stockage lisible par ordinateur sur lequel sont stockées des instructions de programme informatique, les instructions de programmes informatiques, lorsqu'elles sont exécutées par un processeur dans une unité centrale, CU, amenant la CU à réaliser le procédé selon l'une quelconque des revendications 7 à 12.

17. Dispositif de réseau (1200), comprenant une unité distribuée, DU, (900) selon la revendication 13 et une unité centrale, CU, (1100) selon la revendication 15.
